Europäisches Patentamt

European Patent Office

Office européen des brevets

(11) Publication number: **0 048 042**
**B1**

(12) **EUROPEAN PATENT SPECIFICATION**

(45) Date of publication of patent specification: 18.07.84

(51) Int. Cl.³: **H 02 B 11/02**

(21) Application number: **81200925.6**

(22) Date of filing: **20.08.81**

(54) Safety device for spring-controlled circuit breakers which are movable in a housing cubicle.

(30) Priority: **17.09.80 IT 2471880**

(43) Date of publication of application:
**24.03.82 Bulletin 82/12**

(45) Publication of the grant of the patent:
**18.07.84 Bulletin 84/29**

(84) Designated Contracting States:
**AT BE CH DE FR GB LI LU NL SE**

(56) References cited:
**EP - A - 0 045 545**
**FR - A - 1 282 775**
**US - A - 3 072 763**

(73) Proprietor: ANSALDO S.p.A.
Via Pacinotti, 20
I-16151 Genova-Sampierdarena (IT)

(72) Inventor: Neonati, Franco
Via Gambolina 24
I-27029 Vigevano Pavia (IT)
Inventor: Villa, Giuliano
Via Montevideo, 6
I-20144-Milano (IT)

(74) Representative: Henke, Erwin et al,
Ing.Barzanò & Zanardo S.p.A. Via Borgonuovo, 10
I-20121 Milano (IT)

Courier Press, Leamington Spa, England.

## Description

This invention relates to a spring-controlled electric circuit breaker arranged in a housing cubicle, in which it can be moved and from which it can also be completely withdrawn.

In particular, the invention relates to a safety device for such a circuit breaker able to be moved in its compartment in the housing cubicle, in which it can assume a connected position or a disconnected position.

The European Patent Application, No. 812008258 (publication No. 0045545) filed on July 20, 1981 of the same applicatant (prior art under art. 54(3) of the E.P.C.) describes a device which ensures that the circuit breaker can only be moved in its compartment if the breaker is intentionally opened.

This is attained by the device according to the aforesaid patent application by means of a member projecting from the breaker and arranged to assume a position of lesser projection and a position of greater projection respectively, a lever incorporated in the breaker to prevent said member assuming the position of lesser projection when the breaker is closed, and means disposed in the housing cubicle along the path of movement of the breaker which enable said member to assume its position of greater projection when the breaker is in its connected or disconnected position, which further move said member into its position of lesser projection before the movement of the breaker from its said two positions is commenced and which maintain the member in its position of lesser projection during the movement, and which also prevent movement of the breaker from its said two positions when the member is in its position of greater projection. Said lever incorporated in the breaker is operationally connected to the movable breaker contacts in such a manner that it assumes a position in which it retains said member in its position of greater projection when the breaker contacts are closed, and assumes a second position in which it enables said member to be moved into its position of lesser projection when the contacts are open.

In an electric circuit breaker fitted with the device according to the aforesaid patent application, it can happen that its movement from the connected position to the disconnected position takes place with the contacts intentionally open but with the closure springs for the movable contacts still in their loaded state.

In this respect, as is well known, electric circuit breakers of this type are provided with closure springs which are always kept in their loaded state by suitable motor means, in order to cause the movable contacts to trip into their closed position at the required moment. These springs become unloaded by virtue of the closure of the contacts, but immediately afterwards the motor means reload them so that they are ready for a subsequent operation. Suitable locking means keep the closure springs in the loaded state, and it is by acting on these means that the springs are unloaded, with consequent closure of the contacts. Said locking means are operated generally mechanically.

If the breaker is moved from its connected position into its disconnected position, in which checking, maintenance and component replacement operations can be carried out (possibly after totally removing the breaker from the housing cubicle) without its closure springs being unloaded, this can lead to danger to the personnel carrying out such operations. This is because the means which retain the springs in their loaded state can be inadvertently operated, and thus said springs can be released so as to mechanically close the contacts, with consequent danger of accident.

The object of the present invention is to obviate this danger by means of a safety device which automatically unloads the closure springs before the breaker is moved from its connected position to its disconnected position and from this latter to its withdrawn position.

This object is attained according to the invention by means of an improvement to the device which forms the subject matter of the aforesaid patent application of the same applicant, the improvement consisting of the fact that said member projecting from the breaker is constituted by a movable pin linked to the closure spring locking means by lever means and a telescopic rod in such a manner that the movement of said member from its position of greater projection to its position of lesser projection automatically induces the operation of the locking means in order to release the closure springs, and also leads to blockage of the motor means provided for loading said springs.

Because of the fact that, as stated it is necessary to move said member into its position of lesser projection in order to be able to move the breaker, the device according to the present invention ensures that each time the breaker is moved from its connected or disconnected position, its closure springs are automatically unloaded.

One embodiment of the device according to the invention is described in detail hereinafter by way of example with reference to the accompanying drawings, in which:

Figure 1 is a diagrammatic view of the breaker with its contacts closed and its closure springs loaded,

Figure 2 is a similar view with the contacts open, but with the closure springs still loaded, and

Figure 3 is a view showing the contacts open and the closure springs unloaded.

On the drawings, the reference numeral 10 indicates a part of the circuit breaker casing.

A shaft 11 carries a freely rotatable lever 12 which by means of a tie bar 13 is connected to the movable contacts (not shown) of the breaker.

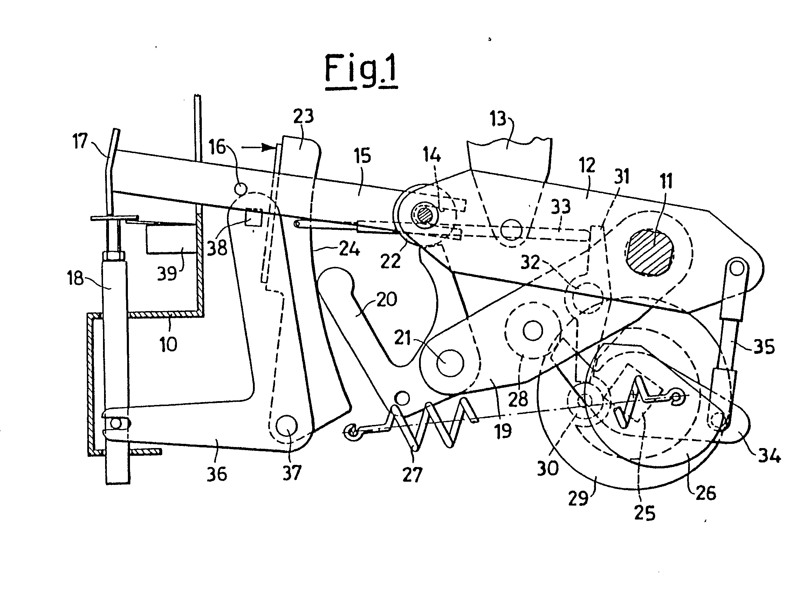

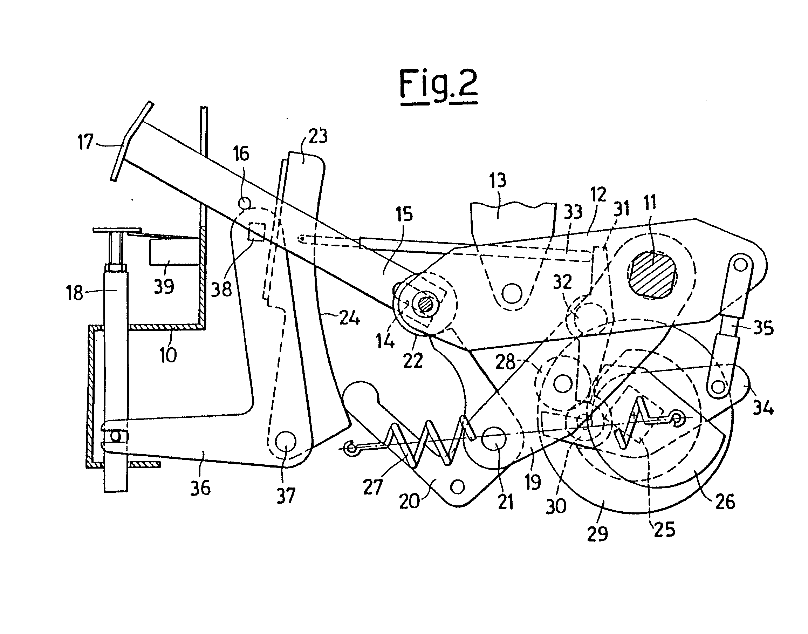

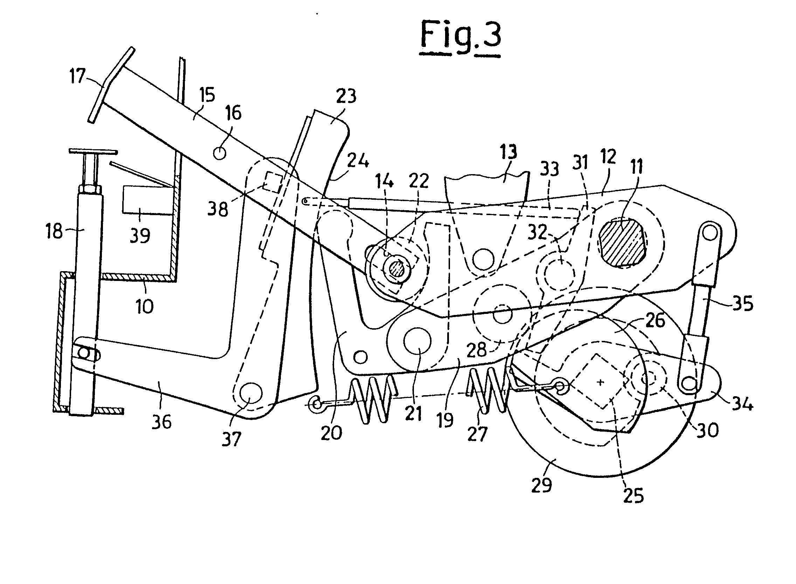

A lever 15 is pivoted at 16 is engaged with the lever 12 by means of a slotted link connection 14, and its free end 17 is able to cooperate with a pin 18 mounted so that it can move along its axis in the breaker casing 10. The pin 18 projects lowerly from the casing 10 and can assume a position of greater projection (Figures 1 and 2) and a position of lesser projection (Figure 3). This latter position can be assumed by the pin 18 only if the lever 15 is rotated clockwise about its pivot 16, i.e. if the lever 12 is rotated anticlockwise about the shaft 11, this latter rotation taking place when the movable contacts are moved from their closed position (Figure 1) into their open position (Figures 2 and 3).

It will be noted that the shaft 11 carries a freely rotatable second lever 19, which at its free end carries a U-shaped pusher 20 pivoted at 21 to the lever 19. An arm of the pusher 20 can act against a roller 22 carried by the lever 12, whereas on the other arm of the pusher 20 there can act a lever 23 which possesses a surface 24 against which said second arm of the pusher 20 abuts.

A shaft 25 disposed with its axis parallel to the axis of the shaft 11 rigidly carries a cam 26, to which one end of closure springs 27 is fixed, their other end being fixed to a fixed point on the casing 10.

The cam 26 is arranged to act on a roller 28 carried by the lever 19.

The shaft 25 also rigidly carries two discs 29, between which there is eccentrically mounted a roller 30 against which a pusher 31 pivoted at 32 to the breaker casing can abut.

On that end of the pusher 31 opposite the end against which the roller 30 abuts, there can act a telescopic rod 33, the other end of which is pivoted to the lever 23.

A further pusher 34 is mounted freely rotatable about the shaft 25, and can abut by means of one end against the roller 28 carried by the lever 19, its other end being connected by a telescopic rod 35 to the lever 12.

A bell crank lever 36 pivoted at 37, which also constitutes the fulcrum of the lever 23, is connected by one arm to the pin 18, its other arm carrying a square pin 38 arranged to act on the lever 23.

A switch 39 operable by the pin 18 is mounted on the casing 10, said switch being connected into the circuit of the motor means (not shown) which load the closure spring 27 by acting on the shaft 25. When the pin 18 is in its position of greater projection (Figures 1 and 2) it keeps the switch 39 closed; the switch being opened when the pin 18 is in its position of lesser projection (Figure 3). When in this latter state, the motor means are unable to reload the closure spring.

The operation of the described device is as follows. In Figure 1 the circuit breaker is shown with its contacts closed and the closure spring 27 loaded. As the contacts are closed, the lever 12 is raised whereas the head 17 of the lever 15 is lowered. The pin 18 is lowered and is retained in this position by the head 17 of the lever 15. The switch 39 for the motor means which load the spring 27 is closed.

If the circuit breaker is now to be moved from its connected or disconnected position, the pin 18 must be released in order to enable it to rise. This can be done only by intentionally opening the breaker contacts. To do this, the lever 23 must be moved in the direction of the arrow indicated in Figure 1. The controls for this action are normally provided in the breaker and are not shown. The consequence of this action is a rotation of the pusher 20 about its pivot 21, so that the arm thereof which abuts against the roller 22 carried by the lever 12 frees this roller and thus releases the lever 12 from the lever 19. In this manner, the opening springs (not shown) which act on the movable contacts are able to operate and open the contacts. Simultaneously, the lever 12 which is no longer retained by the pusher 20 is lowered by means of the tie bar 13. The rotation of the lever 12 about the shaft 11 causes an analogous rotation of the pusher 34 about the shaft 25 by way of the telescopic rod 35, so that said pusher 34 is freed from the roller 28 so that it releases the lever 19. The lever 19 now rotates anticlockwise about the shaft 11, dragging with it the U pusher 20. During this movement, the pusher 20 is guided by the surface 24 of the lever 23. The lowering of the lever 19 terminates when the roller 28 carried by it reaches the lowest point of the contour of the cam 26, and the lowering movement of the lever 12 is induced by the opening movement of the movable contacts. On termination of these movements caused by the intentional opening of the movable breaker contacts, the parts assume the positions shown in Figure 2. It will be noted that the head 17 of the lever 15 has now released the pin 18, whereas the closure spring 27 is still loaded. This is because as the rod 33 is telescopic, the movement of that part thereof connected to the lever 23 has not led to an analogous movement of that part thereof which abuts against the pusher 31, which has therefore remained at rest retained by the shaft 25 in the angular position in which the closure spring 27 is loaded.

In this state, the lever 19 is still rigid with the lever 12 by way of the pusher 20 which abuts against the roller 22, and, if required, the breaker contacts can still be closed by acting on the pusher 31 to thus release the closure spring 27. In this respect, if this is done the spring 27 induces a clockwise rotation of the shaft 25 and the cam 26 rigid therewith, which acts on the roller 28 to cause the lever 19 to rotate clockwise. This latter, by way of the pusher 20, rotates the lever 12 in the same direction, this causing the contacts to close by way of the tie bar 13.

In contrast, if the operations required to move the breaker from its connected or disconnected position are carried out, before this movement is effected the pin 18 is raised by means not illustrated herein and which form part of the device described in the aforesaid patent application of the applicant.

This raising of the pin 18 causes the bell crank lever 36 to rotate clockwise about its pivot 37 (see Figure 3). The pin 38 carried by the bell crank lever 36 acts on the lever 23 and causes this latter lever to also rotate, so that its surface 24 acts on the U pusher 20 to displace it such that the two levers 12 and 19 are released. Subsequently, by means of a further rotation of the levers 36 and 23, the telescopic rod 33 which has terminated its unresisted movement can urge the pusher 31 so that it rotates about its pivot 32 to release the roller 30. By this means, the shaft 25 is no longer retained and the spring 27 can exert its force such that the shaft is rotated through about one half of a revolution. The same rotation is effected by the cam 26 which causes the lever 18 to rise by way of the roller 28. This movement however does not induce an analogous movement of the lever 12 which is released from the lever 19, as the U pusher 20 does not abut against the roller 22. The movement of the lever 19 is therefore unresisted, and the pusher 20, guided by the surface 24 of the lever 23, rises so that the roller 22 penetrates between its two arms. The closure spring 27 becomes unloaded, and all the components of the device assume the positions shown in Figure 3.

It should be noted that the raising of the pin 18 has also caused the switch 39 to open, thus disconnecting the motor means for loading the closure spring, which therefore remains in its unloaded state.

Under these conditions, the circuit breaker can now be moved from the connected position into the disconnected position, and can also be completely extracted from its compartment in the housing cubicle.

As can be seen, by means of just a few additional mechanical elements, the device according to the invention ensures in a simple and reliable manner that the closure springs are unloaded after intentional opening of the contacts, before moving the circuit breaker from its connected or disconnected position.

The device can undergo various modifications without leaving the scope of the inventive idea. Thus, for example, instead of being connected to the lever 23, the telescopic rod 33 can be connected to the bell crank lever 36, obviously by suitably adjusting its loadless stroke.

## Claims

1. A safety device for a spring-controlled electric circuit breaker which can be moved in a housing cubicle from a connected position to a disconnected position and vice versa and which can be withdrawn from said cubicle, said circuit breaker being provided with closure springs (27) which act on movable breaker contacts by way of a lever system and which can be loaded by motor means, and which releasable locking means for maintaining said springs in their loaded state, there being provided a member (18) projecting from the breaker and arranged to assume a position of minor projection and a position of major projection respectively, a lever (17) incorporated in the breaker and operationally connected to the movable breaker contacts, said lever (17) being arranged to cooperate with said member (18) and to assume a first position in which it retains said member (18) in its position of greater projection when the movable breaker contacts are closed and a second position in which it enables said member to be moved into its position of lesser projection when the movable breaker contacts are open, and means (36) disposed in the housing cubicle along the path of movement of the breaker which enable said member (18) to assume its position of greater projection when the breaker is in its connected or disconnected position, and which further move said member into its position of lesser projection before the movement of the breaker from its said two positions is commenced and which maintain the member (18) in its position of lesser projection during the movement, and which also prevent movement of the breaker from its said two positions when the member (18) is in its position of greater projection, whereby said projecting member 18 is constituted by a movable pin (18) linked to said closure spring locking means by lever means (36, 23) and a telescopic rod (33) in such a manner that the movement of said pin (18) from its position of greater projection to its position of lesser projection automatically induces the operation of the locking means in order to release the closure springs (27), and also leads to blockage of the motor means for loading said springs (27).

2. A device as claimed in claim 1, whereby said lever means is a bell crank lever (36) said bell crank lever (36) being connected to the locking means by way of said telescopic rod (33).

3. A device as claimed in claim 1, whereby said lever means is a bell crank lever (36) arranged to act on another lever (23) to which said telescopic rod (33) is connected.

4. A device as claimed in claim 1, whereby said pin (18) acts on a switch (39) connected into the circuit of the motor means for loading the closure springs (27), such that it keeps the switch (39) closed when in its position of greater projection and opens it when in its position of lesser projection.

## Patentansprüche

1. Eine Sicherheitsvorrichtung fuer einen federangetriebenen elektrischen Schalter, der in einer Gehaeusezelle von einer angeschlossenen in eine nicht angeschlossene Lage und umgekehrt verfahrbar und aus der Zelle entnehmbar ist, wobei der Schalter mit auf bewegliche Kontakte ueber ein Hebelsystem ein- wirkenden und motorisch spannbaren Schliess- federn (27) und mit loesbaren Verriegelungsmitteln, um die genannten Federn in ihrem gespannten Zustand zu halten, versehen ist, wobei ferner vorgesehen sind: ein aus dem Schalter vorstehendes Element (18), welches eine geringer vorstehende Lage bzw. eine weiter vorstehende Lage einzunehmen imstande ist; ein im Schalter einverleibter, mit den beweglichen Kontakten in Wirkverbindung stehender Hebel (17), welcher Hebel (17) zur Zusammenwirkung mit dem genannten Element (18) bestimmt ist, um eine erste Lage einzunehmen, in der er das Element (18) in seiner weiter vorstehenden Lage haelt, wenn die beweglichen Kontakte geschlossen sind, sowie um eine zweite Lage einzunehmen, in der er das genannte Element befaehigt, in seine geringer vorstehende Lage bewegt zu werden, wenn die beweglichen Kontakte geoeffnet sind; und innerhalb der Zelle laengs der Bewegungsbahn des Schalters angeordnete Mittel (36) welche das genannte Element (18) befaehigen, seine weiter vorstehende Lage einzunehmen, wenn sich der Schalter in seiner angeschlossenen oder nichtangeschlossenen Lage befindet, welche das genannte Element (18) ferner in seine geringer vorstehende Lage bewegen, bevor die Bewegung des Schalters von seinen beiden Lagen beginnt und welche das Element (18) waehrend dieser Bewegung in seiner geringer vorstehenden Lage halten und ausserdem die Bewegung des Schalters von seinen beiden Lagen verhindern, wenn das Element (18) sich in seiner weiter vorstehenden Lage befindet, wobei das genannte vorstehende Element (18) aus einem beweglichen Zapfen (18) besteht, der mit den Schliessfederverriegelungsmitteln ueber Hebel (36, 23) und eine Teleskopstange (33) derart verbunden ist, dass die Bewegung des Zapfens (18) von seiner weiter vorstehenden Lage in seine geringer vorstehende Lage selbsttaetig die Inbetriebsetzung der Verriegelungsmittel zur Freigabe der Schliessfedern (27) ausloest und auch zur Sperre des Motors zum Spannen der genannten Federn (27) fuehrt.

2. Eine Vorrichtung wie im Anspruch 1 beansprucht, wobei der genannte Hebel ein Winkelhebel (36) ist, welcher Winkelhebel (36) mit den Verriegelungsmitteln ueber die genannte Teleskopstange (33) verbunden ist.

3. Eine Vorrichtung wie im Anspruch 1 beansprucht, wobei der genannte Hebel ein Winkelhebel (36) ist, der auf einen weiteren Hebel (23) einwirkt, an dem die Teleskopstange (33) angeschlossen ist.

4. Eine Vorrichtung wie im Anspruch 1 beansprucht, wobei der genannte Zapfen (18) auf einen, in den Stromkreis des Motors zum Spannen der Schliessfedern (27) eingeschalteten Schalter (39) derart einwirkt, dass er den Schalter (39) geschlossen haelt, wenn er sich in seiner weiter vorstehenden Lage befindet und ihn oeffnet, wenn er sich in seiner geringer vorstehenden Lage befindet.

## Revendications

1. Dispositif de sécurité pour disjoncteurs à ressorts, mobiles dans un logement d'enceinte, d'une position connectée à une position déconnectée et vice-versa et qui peuvent être retirés de ce logement, le disjoncteur étant muni de ressorts de fermeture (27) qui agissent sur des contacts mobiles de rupteur par l'intermédiaire d'un système de leviers et qui peuvent être tendus par des moyens moteurs, et de moyens de blocage libérables pour maintenir ces ressorts dans leur état tendu, un élément (18) étant prévu, dépassant du disjonteur et étant disposé de manière à prendre des positions respectives de moindre saillie et de plus grande saillie, un levier (17) incorporé au disjoncteur et relié fonctionnellement aux contacts mobiles de rupteur, ce levier (17) étant conçu pour coopérer avec l'élément (18) et pour prendre une première position dans laquelle il retient l'élément (18) dans sa position de plus grande saillie quand les contacts mobiles de rupteur sont fermés et une deuxième position dans laquelle il permet à l'élément de passer à sa position de moindre saillie quand les contacts mobiles de rupteur sont ouverts, et des moyens (36) disposés dans le logement d'enceinte le long du parcours de mouvement du disjoncteur et qui permettent à l'élément (18) de prendre sa position de plus grande saillie quand le disjoncteur est dans sa position connectée ou déconnectée, et qui amènent en outre l'élément (18) à sa position de moindre saillie avant que ne commence le mouvement par lequel le disjoncteur quitte ses deux positions, et qui maintiennent l'élément (18) dans sa position de moindre saillie pendant le mouvement et qui empêchent aussi le disjoncteur de quitter ses deux positions quand l'élément (18) est dans sa position de plus grande saillie, de sorte que l'élément en saillie (18) est constitué par une goupille mobile (18) reliée aux moyens de blocage de ressort de fermeture par des moyens à leviers (36, 23) et une tige télescopique (33) de telle sorte que le mouvement de la goupille (18) de sa position de plus grande saillie à sa position de moindre saillie cause automatiquement le fonctionnement des moyens de blocage afin de libérer les ressorts de fermeture (27) et conduit aussi au blocage des moyens moteurs de tension des ressorts (27).

2. Dispositif selon la revendication 1, par lequel les moyens à levier sont un levier coudé (36), ce levier (coudé 36) étant relié aux moyens de blocage par l'intermédiaire de la tige télescopique (33).

3. Dispositif selon la revendication 1, par lequel les moyens à levier sont un levier coudé (36) conçu pour agir sur un autre levier (23) auquel est reliée la tige télescopique (33).

4. Dispositif selon la revendication 1, par lequel la goupille (18) agit sur un interrupteur (39) branché dans le circuit des moyens moteurs de tension des ressorts de fermeture (27), de sorte qu'elle maintient l'interrupteur (39) fermé quand elle est dans sa position de plus grande saillie et l'ouvre quand elle est dans sa position de moindre saillie.

Fig.1

# Fig.2

# Fig.3